(19) Europäisches Patentamt
European Patent Office
Office européen des brevets

(11) **EP 4 511 264 B1**

(12) **EUROPÄISCHE PATENTSCHRIFT**

(45) Veröffentlichungstag und Bekanntmachung des Hinweises auf die Patenterteilung:
**25.03.2026 Patentblatt 2026/13**

(21) Anmeldenummer: **23734146.6**

(22) Anmeldetag: **12.06.2023**

(51) Internationale Patentklassifikation (IPC):
*B60T 8/17* (2006.01)    *G01P 21/00* (2006.01)
*B61L 25/02* (2006.01)    *G01P 3/50* (2006.01)
*B60T 8/172* (2006.01)

(52) Gemeinsame Patentklassifikation (CPC):
**B60T 8/1705; B60T 8/172; B61L 25/021;
G01P 3/50; G01P 21/00**

(86) Internationale Anmeldenummer:
**PCT/EP2023/065625**

(87) Internationale Veröffentlichungsnummer:
**WO 2024/002665 (04.01.2024 Gazette 2024/01)**

(54) **SCHÄTZEINRICHTUNG UND VERFAHREN ZUM ERMITTELN VON BEWEGUNGSSCHÄTZWERTEN**

ESTIMATING DEVICE AND METHOD FOR DETERMINING ESTIMATED MOVEMENT VALUES

DISPOSITIF ET PROCÉDÉ D'ESTIMATION POUR DÉTERMINER DES VALEURS ESTIMÉES DE MOUVEMENT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **29.06.2022 DE 102022206618**

(43) Veröffentlichungstag der Anmeldung:
**26.02.2025 Patentblatt 2025/09**

(73) Patentinhaber: **Siemens Mobility GmbH
80997 München (DE)**

(72) Erfinder:
• **JENNEK, Steffen
82061 Neuried (DE)**
• **SOLLFRANK, Michael
80799 München (DE)**
• **WALZ, Maximilian
96114 Röbersdorf (DE)**

(74) Vertreter: **Siemens Patent Attorneys
Postfach 22 16 34
80506 München (DE)**

(56) Entgegenhaltungen:
WO-A1-2017/186707    DE-A1- 102019 211 934
DE-A1- 102019 211 944    US-A1- 2003 051 544

**Beschreibung**

Im Bereich der Eisenbahntechnik ist eine relativ genaue Ermittlung der Geschwindigkeit von Schienenfahrzeugen von großer Bedeutung, um den betreiberseitig heutzutage üblichen Anforderungen gerecht werden zu können.

Aus der DE 10 2019 211934 A1 ist ein Verfahren zur Bestimmung einer Zuggeschwindigkeit eines Zugs bekannt.

Der Erfindung liegt die Aufgabe zugrunde, eine Schätzeinrichtung anzugeben, mit der sich Bewegungsschätzwerte, die die Bewegung eines Schienenfahrzeugs beschreiben, mit relativ hoher Genauigkeit ermitteln lassen.

Diese Aufgabe wird erfindungsgemäß durch eine Schätzeinrichtung mit den Merkmalen gemäß Patentanspruch 1 gelöst. Vorteilhafte Ausgestaltungen der erfindungsgemäßen Schätzeinrichtung sind in Unteransprüchen angegeben.

Danach ist vorgesehen eine Schätzeinrichtung zum Ermitteln eines neuen Bewegungsschätzwertes, der die Geschwindigkeit eines zumindest zwei Achsen aufweisenden Schienenfahrzeugs angibt, wobei die Schätzeinrichtung umfasst

- ein Kalman-Filter, das eingangsseitig zumindest mit Kraftmomentwerten, Vertikalkraftwerten, Radgrößenwerten und Raddrehzahlwerten beaufschlagt ist und auf deren Basis sowie auf Basis einer Kalman-Filterung einen kalmangeschätzten Fahrzeuggeschwindigkeitswert ermittelt,
- ein Schlupfmodul, das eingangsseitig mit den Kraftmomentwerten, den Radgrößenwerten, den Raddrehzahlwerten und dem jeweils vorherigen Bewegungsschätzwert der Schätzeinrichtung beaufschlagt ist und einen Radumfangsgeschwindigkeitswert und eine Gleitangabe ermittelt, die ein etwaiges Gleiten der jeweiligen Achse angibt, und
- ein Auswertmodul, das auf der Basis des kalmangeschätzten Fahrzeuggeschwindigkeitswerts, des Radumfangsgeschwindigkeitswerts und der Gleitangaben den neuen Bewegungsschätzwert der Schätzeinrichtung ermittelt.

Ein wesentlicher Vorteil der erfindungsgemäßen Schätzeinrichtung besteht darin, dass mit dem erfindungsgemäß vorgesehenen Kalman-Filter in Kombination mit dem erfindungsgemäßen Schlupfmodul mit geringem Hardwareaufwand und geringem Zeitaufwand sehr genaue Bewegungsschätzwerte ermittelt werden können, die für den Betrieb des Schienenfahrzeugs genutzt werden können.

Bezüglich des Schlupfmoduls wird es als vorteilhaft angesehen, wenn das Schlupfmodul bei einem Bremsbetrieb des Schienenfahrzeugs und keinem Gleiten aller Achsen den Radumfangsgeschwindigkeitswert der Achse mit dem größten Radumfangsgeschwindigkeitswert an das Auswertmodul ausgibt, bei einem Antriebsbetrieb und keinem Gleiten aller Achsen den Radumfangsgeschwindigkeitswert der Achse mit dem kleinsten Radumfangsgeschwindigkeitswert an das Auswertmodul ausgibt und bei Gleiten aller Achsen eine Allgleitangabe an das Auswertmodul ausgibt.

Bezüglich des Auswertmoduls wird es als vorteilhaft angesehen, wenn das Auswertmodul bei einem Bremsbetrieb des Schienenfahrzeugs und keinem Gleiten aller Achsen den Radumfangsgeschwindigkeitswert der Achse mit dem größten Radumfangsgeschwindigkeitswert als den neuen Bewegungsschätzwert ausgibt, bei einem Antriebsbetrieb und keinem Gleiten aller Achsen den Radumfangsgeschwindigkeitswert der Achse mit dem kleinsten Radumfangsgeschwindigkeitswert als den neuen Bewegungsschätzwert ausgibt und bei Gleiten aller Achsen den neuen Bewegungsschätzwert anhand des kalmangeschätzten Fahrzeuggeschwindigkeitswerts des Kalman-Filters ermittelt.

Vorteilhaft ist es, wenn die Schätzeinrichtung ein Vertikalkraftberechnungsmodul aufweist, das zumindest auf der Basis der Kraftmomentwerte, die auch von dem Kalman-Filter herangezogen werden, den Radgrößenwerten und dem jeweils vorherigen Bewegungsschätzwert der Schätzeinrichtung einen Vertikalkraftwert pro Achse erzeugt, wobei jeder der Vertikalkraftwerte des Vertikalkraftberechnungsmoduls einen der Vertikalkraftwerte bildet, der von dem Kalman-Filter herangezogen wird.

Auch ist es von Vorteil, wenn die Schätzeinrichtung ein Reibungsbremsmomentberechnungsmodul aufweist, das zumindest auf der Basis eines Bremsdruckwerts pro Achse, der Radgrößenwerte und des jeweils vorherigen Bewegungsschätzwertes der Schätzeinrichtung einen Reibungsbremsmomentwert pro Achse erzeugt, wobei jeder der Reibungsbremsmomentwerte einen der Kraftmomentwerte bildet, der von dem Kalman-Filter herangezogen wird.

Das Kalman-Filter zieht als Kraftmomentwerte vorzugsweise auch achsbezogene Motorkraftmomentwerte heran oder berücksichtigt diese zumindest auch.

Der Kalman-Filter ist vorzugsweise ein erweiterter Kalman-Filter.

Die Schätzeinrichtung gibt als weiteren Bewegungsschätzwert vorzugsweise einen die Beschleunigung des Schienenfahrzeugs angebenden Fahrzeugbeschleunigungswert aus.

Darüber hinaus wird es als vorteilhaft angesehen, wenn der Kalman-Filter außerdem einen den Kraft-Schiene-Kontakt betreffenden Kraftschlusswert pro Achse ermittelt und die Schätzeinrichtung außerdem die Kraftschlusswerte ausgibt.

Die Schätzeinrichtung umfasst vorzugsweise eine Recheneinrichtung und einen Speicher, in dem abgespeichert sind: ein Kalman-Filter-Softwaremodul, das bei Ausführung durch die Recheneinrichtung das Kalman-Filter bildet, ein Schlupfsoftwaremodul, das bei Ausführung durch die Recheneinrichtung das Schlupfmodul bildet, und ein Auswertsoftwaremodul, das bei Ausführung durch die Recheneinrichtung das Auswertmodul bildet.

In dem Speicher abgespeichert ist vorzugsweise auch ein Vertikalkraftberechnungssoftwaremodul, das bei Ausführung durch die Recheneinrichtung das Vertikalkraftberechnungsmodul bildet.

In dem Speicher abgespeichert ist vorzugsweise auch ein Reibungsbremsmomentberechnungssoftwaremodul, das bei Ausführung durch die Recheneinrichtung das Reibungsbremsmomentberechnungsmodul bildet.

Die Erfindung bezieht sich außerdem auf ein Schienenfahrzeug, das mit einer Schätzeinrichtung wie oben beschrieben ausgestattet ist.

Bezüglich der Vorteile des erfindungsgemäßen Schienenfahrzeugs und dessen vorteilhafter Ausgestaltungen sei auf die obigen Ausführungen im Zusammenhang mit der erfindungsgemäßen Schätzeinrichtung und deren vorteilhafter Ausgestaltungen verwiesen.

Mit der Schätzeinrichtung steht vorzugsweise ein Schlupfregler in Verbindung, der unter Heranziehung der geschätzten Kraftschlusswerte pro Achse, der Radumfangsgeschwindigkeitswerte und des jeweiligen Bewegungsschätzwerts der Schätzeinrichtung den Schlupf der jeweiligen Achse regelt.

Auch ist es vorteilhaft, wenn mit der Schätzeinrichtung eine Plausibilisierungseinrichtung in Verbindung steht, die mit den Bewegungsschätzwerten der Schätzeinrichtung eine Plausibilitätsprüfung bezüglich Bewegungsangaben anderer Quellen durchführt.

Die Erfindung bezieht sich außerdem auf ein Verfahren zum Ermitteln eines neuen Bewegungsschätzwertes, der die Geschwindigkeit eines zumindest zwei Achsen aufweisenden Schienenfahrzeugs angibt, wobei bei dem Verfahren in ein Kalman-Filter eingangsseitig zumindest Kraftmomentwerte, Vertikalkraftwerte, Radgrößenwerte und Raddrehzahlwerte eingespeist werden und auf deren Basis sowie auf Basis einer Kalman-Filterung ein kalmangeschätzter Fahrzeuggeschwindigkeitswert ermittelt wird, mit den Radgrößenwerten, den Raddrehzahlwerten und dem jeweils zuvor ermittelten Bewegungsschätzwert pro Achse ein Radumfangsgeschwindigkeitswert und eine Gleitangabe ermittelt wird, die ein etwaiges Gleiten der jeweiligen Achse angibt, und auf der Basis des kalmangeschätzten Fahrzeuggeschwindigkeitswerts, des Radumfangsgeschwindigkeitswerts und der Gleitangaben der neue Bewegungsschätzwert ermittelt wird.

Bezüglich der Vorteile des erfindungsgemäßen Verfahrens und dessen vorteilhafter Ausgestaltungen sei auf die obigen Ausführungen im Zusammenhang mit der erfindungsgemäßen Schätzeinrichtung und deren vorteilhafter Ausgestaltungen verwiesen.

Die Erfindung wird nachfolgend anhand von Ausführungsbeispielen näher erläutert; dabei zeigen beispielhaft

Figur 1    ein Ausführungsbeispiel für eine erfindungsgemäße Schätzeinrichtung in Form eines Blockschaltbilds,

Figur 2    eine Rechenanlage, in der die Schätzeinrichtung gemäß Figur 1 implementiert ist und die demgemäß die Schätzeinrichtung gemäß Figur 1 bildet, und

Figur 3    ein Schienenfahrzeug, das mit der Schätzeinrichtung gemäß den Figuren 1 und 2 ausgestattet ist.

In den Figuren werden der Übersicht halber für identische oder vergleichbare Komponenten dieselben Bezugszeichen verwendet.

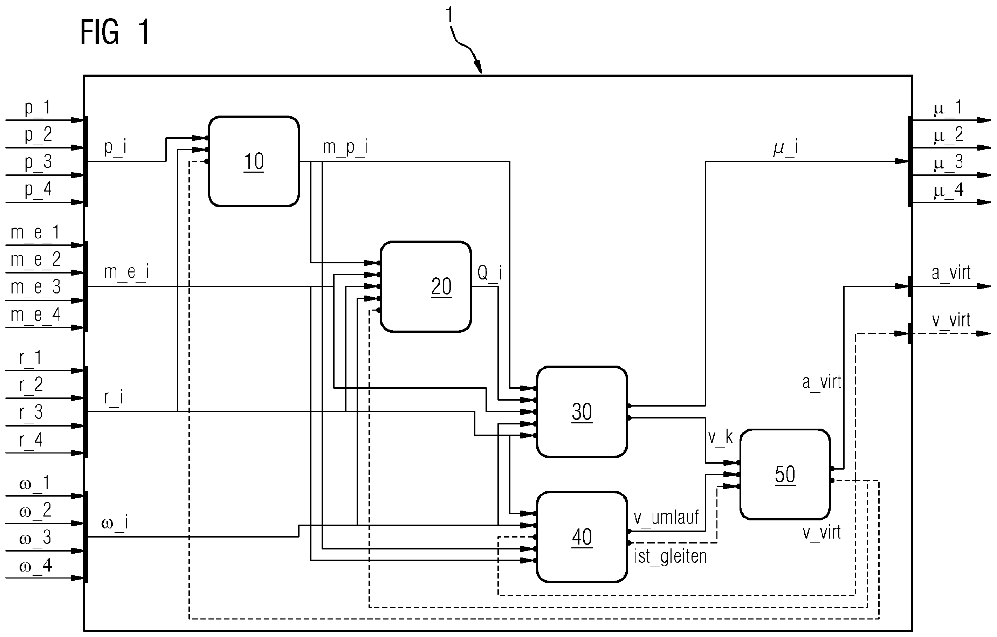

Die Figur 1 zeigt ein Ausführungsbeispiel für eine erfindungsgemäße Schätzeinrichtung 1 in Form eines Blockschaltbilds. Die Schätzeinrichtung 1 umfasst ein Reibungsbremsmomentberechnungsmodul 10, ein Vertikalkraftberechnungsmodul 20, ein erweitertes ("extended") Kalman-Filter 30, ein Schlupfmodul 40 und ein Auswertmodul 50.

Die Schätzeinrichtung 1 hat Eingänge für

- Bremsdruckwerte in Form von Bremszylinderdrücken $p\_i$,
- elektrische Motorkraftmomentwerte $m\_e\_i$ (nachfolgend auch kurz Motormomentwerte genannt),
- Radgrößenwerte beispielsweise in Form dynamischer Radradien $r\_i$ und
- Raddrehzahlwerte $\omega\_i$, die nachfolgend auch als Achsdrehzahlen bezeichnet werden.

Der Index i bezeichnet die jeweilige Achse. Bei dem Ausführungsbeispiel gemäß Figur 1 wird beispielhaft davon ausgegangen, dass das Schienenfahrzeug, für das die Schätzeinrichtung eingesetzt wird, vier Achsen aufweist, also i die Werte zwischen 1 und 4 annehmen kann.

Die Schätzeinrichtung 1 hat Ausgänge für

- Kraftschlusswerte in Form von Haftwerten $\mu\_i$, die den Rad/Schiene-Kontakt beschreiben,
- einen neuen Bewegungsschätzwert in Form eines Geschwindigkeitsschätzwerts v_virt und
- einen neuen Bewegungsschätzwert in Form eines Beschleunigungsschätzwerts a_virt.

In dem Reibungsbremsmomentberechnungsmodul 10 werden aus den gemessenen Bremszylinderdrücken p_i, den dynamischen Radradien r_i, geometrischen Konstanten (wie dem Reibradius) und einem geschwindigkeitsabhängigen Reibwert zwischen Rad und Bremsscheibe Reibungsbremsmomentwerte m_p_i je Achse berechnet.

In dem Vertikalkraftberechnungsmodul 20 werden aus den Reibungsbremsmomentwerten m_p_i, den elektrischen Motormomenten m_e_i, den dynamischen Radradien r_i, den Achsdrehzahlen $\omega$_i bekannten Fahrwiderständen, der bekannten Masse des Wagenkastens sowie bekannten Geometriefaktoren dynamische Radaufstandskräfte $Q_i$ berechnet.

Die Fahrwiderstände $F_w$ können näherungsweise durch empirisch abgeleitete Konstanten sowie aus der jeweiligen Fahrzeuggeschwindigkeit ermittelt werden.

Auf Basis eines regelungstechnischen Beobachters wird das Kalman-Filter 30 realisiert. Als mathematisches Modell dienen vorzugsweise die Bewegungsgleichungen am Rad und dem Wagenkasten gemäß den folgenden Gleichungen (1) - (5):

$$M\ddot{s} = F_w + Q_1\mu_1 + Q_2\mu_2 + Q_3\mu_3 + Q_4\mu_4 + F_{Kupl} \quad (1)$$

$$I_1\dot{\omega}_1 = m\_p_1 + Q_1\mu_1 r_1 + m\_e_1 \quad (2)$$

$$I_2\dot{\omega}_2 = m\_p_2 + Q_2\mu_2 r_2 + m\_e_2 \quad (3)$$

$$I_3\dot{\omega}_3 = m\_p_3 + Q_3\mu_3 r_3 + m\_e_3 \quad (4)$$

$$I_4\dot{\omega}_4 = m\_p_4 + Q_4\mu_4 r_4 + m\_e_4 \quad (5)$$

In translatorischer Richtung gemäß Gleichung (1) lassen sich aus den Newtonschen Gesetzen ableiten:

- die Summe der Fahrwiderstände ($F_w$),
- Produkte aus den Radaufstandskräften $Q_i$ (errechnet im Vertikalkraftberechnungsmodul 20) und der Haftwerte $\mu_i$,
- Kupplungskräfte $F_{Kupl}$ zwischen Wagenkästen, wobei die Kupplungskräfte, sofern sie nicht gemessen werden, alternativ vernachlässigt werden können, und
- das Produkt aus Masse $M$ und Beschleunigung š.

Die Masse M setzt sich zusammen aus einem statischen Anteil, welcher durch das Engineering bekannt ist, sowie einem betrieblichen Anteil, welcher durch Federkräfte des Wagenkastens gemessen werden kann.

In rotatorischer Richtung lassen sich unter Einbezug der Gleichungen (2) bis (5) ableiten:

- die resultierenden achsbezogenen Motormomentwerte m_e_i, die sich aus den Elektromotorantriebs- und -bremsmomenten ergeben, wobei die Motormomentwerte m_e_i beispielsweise aus den elektrischen Größen des Motors berechnet werden können,
- die pneumatischen Bremsmomente m_p_i, die das Reibungsbremsmomentberechnungsmodul 10 erzeugt,
- ein Moment basierend auf der Radaufstandskraft $Q_i$ (errechnet im Vertikalkraftberechnungsmodul 20), dem Haftwert $\mu_i$ und dem Radradius $r_i$, und
- das Produkt aus den Trägheitsmomenten $I_i$ und den Radsatzbeschleunigungen $\dot{\omega}_i$, wobei die Trägheitsmomente $I_i$ der Achsen durch das Engineering bekannt sind und die Radsatzbeschleunigungen durch Ableiten der Achsdrehzahlen ermittelt werden können.

Die Bewegungsgleichungen werden in die Zustandsraumdarstellung überführt und dem Kalman-Filter 30 als mathematische Randbedingung zur Verfügung gestellt:

$$\dot{\vec{x}} = f(\vec{x}, \vec{u})$$

mit

$$\vec{u} = \left[ m\_p_1, m\_p_2, m\_p_3, m\_p_4, Q_1, Q_2, Q_3, Q_4, m\_e_1, m\_e_2, m\_e_3, m\_e_4, r_1, r_2, r_3, r_4 \right]$$

und

$$\vec{x} = [\omega_1, \omega_2, \omega_3, \omega_4, \mu_1, \mu_2, \mu_3, \mu_4, \dot{s}]$$

folgt

$$\dot{\vec{x}} = \begin{pmatrix} \frac{1}{I_1}(u(1) + u(5)x(5)u(13) + u(9)) \\ \frac{1}{I_2}(u(2) + u(6)x(6)u(14) + u(10)) \\ \frac{1}{I_3}(u(3) + u(7)x(7)u(15) + u(11)) \\ \frac{1}{I_4}(u(4) + u(8)x(8)u(16) + u(12)) \\ 0 \\ 0 \\ 0 \\ 0 \\ \frac{1}{M}(...x(9)^2 + u(9) + u(5)x(5) + u(6)x(6) + u(7)x(7) + u(8)x(8)) \end{pmatrix}$$

Der Zustandsvektor $\vec{x}$ hat n=9 Zustände und das Prozessrauschen hat die Dimension $Q^{(9x9)}$, wobei hier die Diagonaleinträge der Matrix besetzt sind.

Gemessen und dem Kalman-Filter 30 als Beobachtungen zurückgeführt, werden die Raddrehzahlen $\omega_i$, womit m=4 Beobachtungen zur Verfügung stehen. Es ergeben sich eine Beobachtungsmatrix $H^{(4x9)}$ und eine diagonal besetzte Kovarianzmatrix des Messrauschens $R^{(4x4)}$.

Die Diagonaleinträge der Kovarianzmatrix und der Prozessrauschmatrix werden vorzugsweise empirisch ermittelt.

Aus den Eingängen $(\vec{x}, \vec{u})$ schätzt das Kalman-Filter 30 als Kraftschlusswerte die aktuellen Haftwerte sowie eine Geschwindigkeit v_k, die nachfolgend Kalman-Geschwindigkeit genannt wird.

Das Schlupfmodul 40 berechnet aus den Raddrehzahlen $\omega_i$ und den Radradien r_i den Achsgeschwindigkeitswert v_umlauf gemäß:

- Im Bremsbetrieb (Erkennung durch die Summe der Reibungsbremsmomentwerte und Motormomentwerten) definiert die schnellste Achse den Achsgeschwindigkeitswert.
- Im Antriebsbetrieb definiert die langsamste Achse den Achsgeschwindigkeitswert.

Außerdem wird mit Zuhilfenahme der zurückgeführten Geschwindigkeit bzw. des Bewegungsschätzwerts v_virt der Zustand "ist_gleiten" ermittelt. Dieser Zustand drückt aus, ob sich das Fahrzeug im Allachsgleiten befindet. Dazu werden folgende Kriterien genutzt:

- die Varianz der Achsdrehzahlen,
- die erste zeitliche Ableitung der Achsdrehzahlen,
- die zweite zeitliche Ableitung der Achsdrehzahlen und
- die Schlupfabweichung der Achsdrehzahlen von einer Referenzgeschwindigkeit, die beispielsweise dem zuletzt ermittelten Geschwindigkeitsschätzwert v_virt entsprechen kann.

Im Auswertmodul 50 wird aus der Kalman-Geschwindigkeit v_k sowie dem Achsgeschwindigkeitswert der neue Geschwindigkeitsschätzwert v_virt sowie als neuer Beschleunigungsschätzwert a_virt dessen zeitliche Ableitung gebildet, vorzugsweise gemäß:

- Ohne Allachsgleiten (ist gleiten == 0) definiert der Achsgeschwindigkeitswert (v_umlauf) den Geschwindigkeitsschätzwert v_virt.
- Wenn Allachsgleiten vorliegt (ist_gleiten == 1), wird die Kalman-Geschwindigkeit v_k für den neuen Geschwindigkeitsschätzwert v_virt herangezogen. Die Kalman-Geschwindigkeit v_k wird dazu von einem Offset befreit, indem diese auf den letzten Achsgeschwindigkeitswert (ohne Allachsgleiten) "hochgezogen" bzw. "runtergezogen" wird und bestimmt während des Allachsgleitens, den neuen Geschwindigkeitsschätzwert v_virt.

Durch Differenzieren und Glätten des neuen Geschwindigkeitsschätzwerts v_virt entsteht der neue Beschleunigungsschätzwert a_virt, welcher zur Plausibilisierung der gemessenen Fahrzeugbeschleunigung herangezogen werden kann.

Zusammengefasst kann auf Basis der Bremszylinderdrücke, der Motormomente, der dynamischen Raddurchmesser sowie der Raddrehzahlen die Schätzeinrichtung 1 die nicht messbaren Haftwerte sowie neue Geschwindigkeitsschätzwerte v_und neue Beschleunigungsschätzwerte a_virt ermitteln, welche beispielsweise zur Plausibilisierung einer gemessenen Fahrzeugbeschleunigung herangezogen werden können.

Durch einen nachgelagerten Regler kann mit den geschätzten Haftwerten pro Radsatz sowie der Geschwindigkeit (also dem Bewegungsschätzwert v_virt) ein Schlupf eingestellt werden, sodass sich die größtmöglichen Haftwerte ergeben. Damit erreicht man eine Minimierung des Anhaltewegs bzw. eine Maximierung der Traktionskraft.

Der Beschleunigungsschätzwert a_virt kann - wie bereits erwähnt - zur Plausibilisierung der gemessenen Beschleunigung genutzt werden. Durch diese diversitäre Redundanz kann entweder die Sicherheit erhöht werden oder auf den Einbau zusätzlicher Hardware verzichtet werden bzw. eine stärkere Gewichtung der Messwerte der verbauten Sensoren erfolgen.

Zusätzlich kann der neue Geschwindigkeitsschätzwert v_virt genutzt werden, um die Zeit zwischen dem Erkennen des Allachsgleitens und des Auslösens des Driftschutzes anzupassen. Der Driftschutz wird vorzugsweise nicht nach einer festen Zeit ausgeführt, sondern nachdem die Differenz zwischen "klassischer" Referenzgeschwindigkeit, also die steilheitsbegrenzte Achsgeschwindigkeit, und dem Geschwindigkeitsschätzwert v_virt einen vorgegebenen Wert überschreitet. So können sowohl unzulässig große Schlupfwerte als auch unnötiges Entbremsen der Achsen verhindert werden.

Die Schätzeinrichtung 1 ermöglicht es beispielsweise auch, Beschleunigungssensoren, GPS- oder Radar-Daten für die Referenzgeschwindigkeitsermittlung stärker zu gewichten, da diese mit einer diversitär redundanten Methode, durch vorhandene Daten, plausibilisiert werden können. Außerdem wird eine genauere Schätzung des Haftwertes ermöglicht, was eine Optimierung der Haftwertausnutzung bei der Schlupfregelung im Traktions- sowie Bremsfall nach sich zieht.

Zusätzlich kann der Driftschutzeingriff den Umgebungsbedingungen angepasst erfolgen, sodass die Genauigkeit der Referenzgeschwindigkeit erhöht und der Anhalteweg verkürzt werden kann.

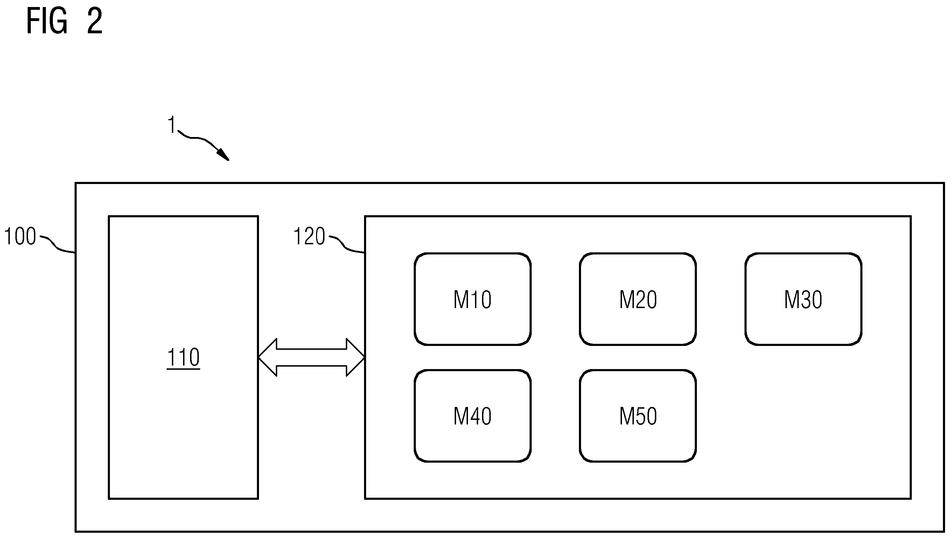

Die Figur 2 zeigt beispielhaft die Implementierung der Schätzeinrichtung 1 gemäß Figur 1 in einer Rechenanlage 100, die die Schätzeinrichtung 1 bildet oder zumindest auch bildet. Die Rechenanlage 100 und damit die Schätzeinrichtung 1 umfassen eine Recheneinrichtung 110 und einen Speicher 120, in dem ein Kalman-Filter-Softwaremodul M30, das bei Ausführung durch die Recheneinrichtung das Kalman-Filter 30 gemäß Figur 1 bildet, ein Schlupfsoftwaremodul M40, das bei Ausführung durch die Recheneinrichtung das Schlupfmodul 40 gemäß Figur 1 bildet, und ein Auswertsoftwaremodul M50, das bei Ausführung durch die Recheneinrichtung das Auswertmodul 50 gemäß Figur 1 bildet, abgespeichert sind.

Außerdem sind in dem Speicher 120 ein Vertikalkraftberechnungssoftwaremodul M20, das bei Ausführung durch die Recheneinrichtung das Vertikalkraftberechnungsmodul 20 gemäß Figur 1 bildet, und ein Reibungsbremsmomentberechnungssoftwaremodul M10, das bei Ausführung durch die Recheneinrichtung das Reibungsbremsmomentberechnungsmodul 10 gemäß Figur 1 bildet, abgespeichert.

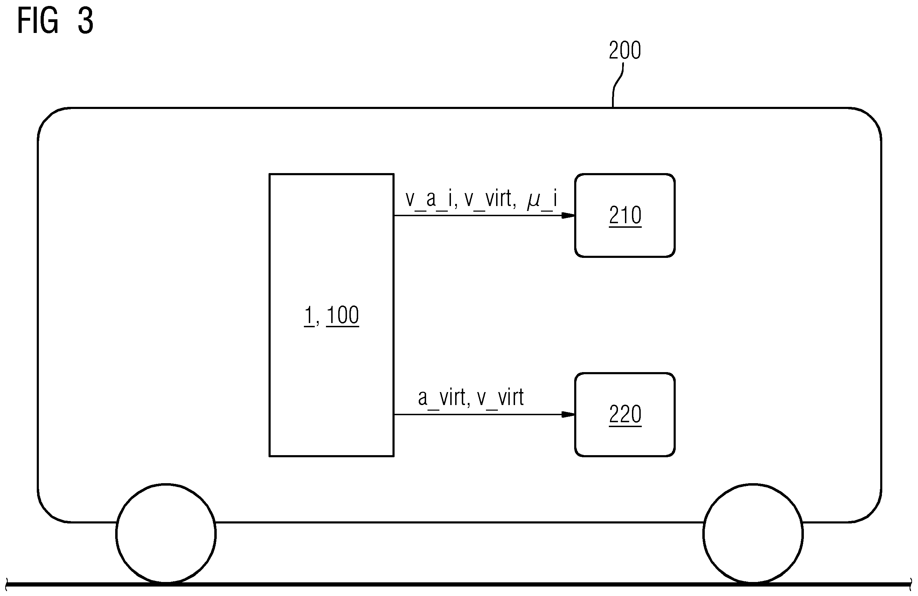

Die Figur 3 zeigt ein Ausführungsbeispiel für ein Schienenfahrzeug 200, das mit einer Rechenanlage 100 gemäß Figur 2 und damit mit einer Schätzeinrichtung 1 gemäß Figur 1 ausgestattet ist.

Das Schienenfahrzeug 200 umfasst außerdem einen Schlupfregler 210, der unter Heranziehung der geschätzten Kraftschlusswerte $\mu\_i$ pro Achse, der Radumfangsgeschwindigkeitswerte und des jeweiligen Bewegungsschätzwerts v_virt der Schätzeinrichtung 1 den Schlupf der jeweiligen Achse regelt.

Mit der Schätzeinrichtung 1 steht darüber hinaus eine Plausibilisierungeinrichtung 220 in Verbindung, die mit den Bewegungsschätzwerten der Schätzeinrichtung 1 eine Plausibilitätsprüfung bezüglich Bewegungsangaben anderer Quellen durchführt.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder anderen Unteransprüchen, um weitere andere Ausführungsbeispiele zu erhalten.

**Patentansprüche**

1. Schätzeinrichtung (1) zum Ermitteln eines neuen Bewegungsschätzwertes (v_virt), der die Geschwindigkeit eines zumindest zwei Achsen aufweisenden Schienenfahrzeugs (200) angibt, umfassend

   - ein Kalman-Filter (30), das eingangsseitig zumindest mit Kraftmomentwerten (m_p_i, m_e_i), Vertikalkraftwerten (Q_i), Radgrößenwerten (r_i) und Raddrehzahlwerten (ω_i) beaufschlagt ist und auf deren Basis sowie auf Basis einer Kalman-Filterung einen kalmangeschätzten Fahrzeuggeschwindigkeitswert (v_k) ermittelt,
   - ein Schlupfmodul (40), das eingangsseitig mit den Kraftmomentwerten (m_p_i, m_e_i), den Radgrößenwerten (r_i), den Raddrehzahlwerten (ω_i) und dem jeweils vorherigen Bewegungsschätzwert (v_virt) der Schätzeinrichtung (1) beaufschlagt ist und einen Radumfangsgeschwindigkeitswert (v_umlauf) und eine Gleitangabe ermittelt, die ein etwaiges Gleiten der jeweiligen Achse angibt, und
   - ein Auswertmodul (50), das auf der Basis des kalmangeschätzten Fahrzeuggeschwindigkeitswerts (v_k), des Radumfangsgeschwindigkeitswerts (v_umlauf) und der Gleitangaben den neuen Bewegungsschätzwert (v_virt) der Schätzeinrichtung (1) ermittelt.

2. Schätzeinrichtung (1) nach Anspruch 1,
   **dadurch gekennzeichnet, dass**
   das Schlupfmodul (40)

   - bei einem Bremsbetrieb des Schienenfahrzeugs (200) den Radumfangsgeschwindigkeitswert (v_umlauf) der Achse mit dem größten Radumfangsgeschwindigkeitswert an das Auswertmodul (50) ausgibt,
   - bei einem Antriebsbetrieb den Radumfangsgeschwindigkeitswert (v_umlauf) der Achse mit dem kleinsten Radumfangsgeschwindigkeitswert an das Auswertmodul (50) ausgibt und
   - bei Gleiten aller Achsen eine Allgleitangabe (ist_gleiten) an das Auswertmodul (50) ausgibt.

3. Schätzeinrichtung (1) nach Anspruch 2,
   **dadurch gekennzeichnet, dass**
   das Auswertmodul (50)

   - bei einem Brems- oder Antriebsbetrieb des Schienenfahrzeugs (200) und keinem Gleiten aller Achsen den Radumfangsgeschwindigkeitswert (v_umlauf) als den neuen Bewegungsschätzwert (v_virt) ausgibt, und
   - bei Gleiten aller Achsen den neuen Bewegungsschätzwert (v_virt) anhand des kalmangeschätzten Fahrzeuggeschwindigkeitswerts (v_k) des Kalman-Filters (30) ermittelt.

4. Schätzeinrichtung (1) nach einem der voranstehenden Ansprüche,
   **dadurch gekennzeichnet, dass**

   - die Schätzeinrichtung (1) ein Vertikalkraftberechnungsmodul (20) aufweist, das zumindest auf der Basis der Kraftmomentwerte (m_p_i, m_e_i), die auch von dem Kalman-Filter (30) herangezogen werden, den Radgrößenwerten (r_i) und dem jeweils vorherigen Bewegungsschätzwert (v_virt) der Schätzeinrichtung (1) einen Vertikalkraftwert (Q_i) pro Achse erzeugt,
   - wobei jeder der Vertikalkraftwerte (Q_i) des Vertikalkraftberechnungsmoduls (20) einen der Vertikalkraftwerte (Q_i) bildet, der von dem Kalman-Filter (30) herangezogen wird.

5. Schätzeinrichtung (1) nach einem der voranstehenden Ansprüche,
   **dadurch gekennzeichnet, dass**

   - die Schätzeinrichtung (1) ein Reibungsbremsmomentberechnungsmodul (10) aufweist, das zumindest auf der Basis eines Bremsdruckwerts (p_i) pro Achse, der Radgrößenwerte (r_i) und des jeweils vorherigen Bewegungsschätzwertes (v_virt) der Schätzeinrichtung (1) einen Reibungsbremsmomentwert (m_p_i) pro Achse erzeugt,
   - wobei jeder der Reibungsbremsmomentwerte (m_p_i) einen der Kraftmomentwerte (m_p_i, m_e_i) bildet, der von dem Kalman-Filter (30) herangezogen wird.

6. Schätzeinrichtung (1) nach einem der voranstehenden Ansprüche,
   **dadurch gekennzeichnet, dass**
   das Kalman-Filter (30) als Kraftmomentwerte (m_p_i, m_e_i) achsbezogene Motorkraftmomentwerte (m_e_i) heranzieht oder diese zumindest auch berücksichtigt.

**7.** Schätzeinrichtung (1) nach einem der voranstehenden Ansprüche,
**dadurch gekennzeichnet, dass**
das Kalman-Filter (30) ein erweitertes Kalman-Filter (30) ist.

**8.** Schätzeinrichtung (1) nach einem der voranstehenden Ansprüche,
**dadurch gekennzeichnet, dass**
die Schätzeinrichtung (1) als weiteren Bewegungsschätzwert (a_virt) einen die Beschleunigung des Schienenfahrzeugs (200) angebenden Fahrzeugbeschleunigungswert ausgibt.

**9.** Schätzeinrichtung (1) nach einem der voranstehenden Ansprüche,
**dadurch gekennzeichnet, dass**

- das Kalman-Filter (30) außerdem einen den Kraft-Schiene-Kontakt betreffenden Kraftschlusswert ($\mu$_i) pro Achse ermittelt und
- die Schätzeinrichtung (1) außerdem die Kraftschlusswerte ($\mu$_i) ausgibt.

**10.** Schätzeinrichtung (1) nach einem der voranstehenden Ansprüche,
**dadurch gekennzeichnet, dass**
die Schätzeinrichtung eine Recheneinrichtung (110) und einen Speicher (120) umfasst, in dem abgespeichert sind

- ein Kalman-Filter-Softwaremodul (M30), das bei Ausführung durch die Recheneinrichtung das Kalman-Filter (30) bildet,
- ein Schlupfsoftwaremodul (M40), das bei Ausführung durch die Recheneinrichtung das Schlupfmodul (40) bildet, und
- ein Auswertsoftwaremodul (M50), das bei Ausführung durch die Recheneinrichtung das Auswertmodul (50) bildet.

**11.** Schätzeinrichtung (1) nach Anspruch 10,
**dadurch gekennzeichnet, dass**
in dem Speicher (120) abgespeichert sind

- ein Vertikalkraftberechnungssoftwaremodul (M20), das bei Ausführung durch die Recheneinrichtung das Vertikalkraftberechnungsmodul (20) bildet, und/oder
- ein Reibungsbremsmomentberechnungssoftwaremodul (M10), das bei Ausführung durch die Recheneinrichtung das Reibungsbremsmomentberechnungsmodul (10) bildet.

**12.** Schienenfahrzeug (200),
**dadurch gekennzeichnet, dass**
das Schienenfahrzeug mit einer Schätzeinrichtung (1) nach einem der voranstehenden Ansprüche ausgestattet ist.

**13.** Schienenfahrzeug nach Anspruch 12,
**dadurch gekennzeichnet, dass**
mit der Schätzeinrichtung (1) ein Schlupfregler (210) in Verbindung steht, der unter Heranziehung der geschätzten Kraftschlusswerte pro Achse, der Radumfangsgeschwindigkeitswerte und des jeweiligen Bewegungsschätzwerts (v_virt) der Schätzeinrichtung (1) den Schlupf der jeweiligen Achse regelt.

**14.** Schienenfahrzeug nach Anspruch 12 oder 13,
**dadurch gekennzeichnet, dass**
mit der Schätzeinrichtung (1) eine Plausibilisierungeinrichtung (220) in Verbindung steht, die mit den Bewegungsschätzwerten der Schätzeinrichtung (1) eine Plausibilitätsprüfung bezüglich Bewegungsangaben anderer Quellen durchführt.

**15.** Verfahren zum Ermitteln eines neuen Bewegungsschätzwertes (v_virt), der die Geschwindigkeit eines zumindest zwei Achsen aufweisenden Schienenfahrzeugs (200) angibt,
wobei bei dem Verfahren

- in ein Kalman-Filter (30) eingangsseitig zumindest Kraftmomentwerte (m_p_i, m_e_i), Vertikalkraftwerte (Q_i), Radgrößenwerte (r_i) und Raddrehzahlwerte ($\omega$_i) eingespeist werden und auf deren Basis sowie auf Basis einer Kalman-Filterung ein kalmangeschätzter Fahrzeuggeschwindigkeitswert (v_k) ermittelt wird,
- mit den Radgrößenwerten (r_i), den Raddrehzahlwerten (ω_i) und dem jeweils zuvor ermittelten Bewegungsschätzwert (v_virt) ein Radumfangsgeschwindigkeitswert (v_umlauf) und eine Gleitangabe (ist_gleiten) ermittelt wird, die ein etwaiges Gleiten der jeweiligen Achse angibt, und
- auf der Basis des kalmangeschätzten Fahrzeuggeschwindigkeitswerts (v_k), des Radumfangsgeschwindigkeitswerts (v_umlauf) und der Gleitangaben der neue Bewegungsschätzwert (v_virt) ermittelt wird.

**Claims**

1. Estimating device (1) for determining a new estimated movement value (v_virt) which indicates the speed of a rail vehicle (200) having at least two axles, comprising

   - a Kalman filter (30) which is supplied on the input side at least with torque values (m_p_i, m_e_i), vertical force values (Q_i), wheel size values (r_i) and wheel rotary speed values (ω_i) and, on the basis thereof and on the basis of a Kalman filtration, determines a Kalman-estimated vehicle speed value (v_k),
   - a slip module (40) that is supplied on the input side with the torque values (m_p_i, m_e_i), the wheel size values (r_i), the wheel rotary speed values (ω_i) and the respective prior estimated movement value (v_virt) from the estimating device (1) and determines a wheel circumferential speed value (v_circulate) and a sliding indication which indicates any sliding of the respective axle, and
   - an evaluating module (50) which determines the new estimated movement value (v_virt) of the estimating device (1) on the basis of the Kalman-estimated vehicle speed value (v_k), the wheel circumferential speed value (v_circulate) and the sliding indications.

2. Estimating device (1) according to claim 1,
   **characterised in that**
   the slip module (40)

   - during a braking operation of the rail vehicle (200), outputs the wheel circumferential speed value (v_circulate) of the axle with the highest wheel circumferential speed value to the evaluating module (50),
   - during a driving operation, outputs the wheel circumferential speed value (v_circulate) of the axle with the smallest wheel circumferential speed value to the evaluating module (50), and
   - during sliding of all the axles, outputs an all-sliding indication (actual_sliding) to the evaluating module (50).

3. Estimating device (1) according to claim 2,
   **characterised in that**
   the evaluating module (50)

   - during a braking or driving operation of the rail vehicle (200) and no sliding of all the axles, outputs the wheel circumferential speed value (v_circulate) as the new estimated movement value (v_virt), and
   - during sliding of all the axles, determines the new estimated movement value (v_virt) on the basis of the Kalman-estimated vehicle speed value (v_k) of the Kalman filter (30).

4. Estimating device (1) according to one of the preceding claims,
   **characterised in that**

   - the estimating device (1) has a vertical force calculating module (20) which generates, at least on the basis of the torque values (m_p_i, m_e_i) that are also used by the Kalman filter (30), the wheel size values (r_i) and the respective prior estimated movement value (v_virt) of the estimating device (1), a vertical force value (Q_i) per axle,
   - wherein each of the vertical force values (Q_i) of the vertical force calculating module (20) forms one of the vertical force values (Q_i) that is used by the Kalman filter (30).

5. Estimating device (1) according to one of the preceding claims,
   **characterised in that**

   - the estimating device (1) has a friction braking torque calculating module (10) which generates, at least on the basis of a braking pressure value (p_i) per axle, the wheel size values (r_i) and the respective prior estimated movement value (v_virt) of the estimating device (1), a friction braking torque value (m_p_i) per axle,
- wherein each of the friction braking torque values (m_p_i) forms one of the torque values (m_p_i, m_e_i) that is used by the Kalman filter (30).

6. Estimating device (1) according to one of the preceding claims,
**characterised in that**
the Kalman filter (30) uses axle-related motor torque values (m_e_i) as torque values (m_p_i, m_e_i) or at least also takes these into account.

7. Estimating device (1) according to one of the preceding claims,
**characterised in that**
the Kalman filter (30) is an extended Kalman filter (30).

8. Estimating device (1) according to one of the preceding claims,
**characterised in that**
the estimating device (1) outputs, as a further estimated movement value (a_virt), a vehicle acceleration value indicating the acceleration of the rail vehicle (200).

9. Estimating device (1) according to one of the preceding claims,
**characterised in that**

- the Kalman filter (30) also determines a traction value ($\mu$_i) relating to the force-rail contact per axle and
- the estimating device (1) also outputs the traction values ($\mu$_i).

10. Estimating device (1) according to one of the preceding claims,
**characterised in that**
the estimating device comprises a computing device (110) and a memory store (120) in which are stored

- a Kalman filter software module (M30) which, when executed by the computing device, forms the Kalman filter (30),
- a slip software module (M40) which, when executed by the computing device, forms the slip module (40), and
- an evaluating software module (M50) which, when executed by the computing device, forms the evaluating module (50).

11. Estimating device (1) according to claim 10,
**characterised in that**
stored in the memory store (120) are

- a vertical force calculating software module (M20) which, when executed by the computing device, forms the vertical force calculating module (20), and/or
- a friction braking torque calculating software module (M10) which, when executed by the computing device, forms the friction braking torque calculating module (10).

12. Rail vehicle (200),
**characterised in that**
the rail vehicle is equipped with an estimating device (1) according to one of the preceding claims.

13. Rail vehicle according to claim 12,
**characterised in that**
connected to the estimating device (1) is a slip regulator (210) which, by taking account of the estimated traction values per axle, the wheel circumferential speed values and the respective estimated movement value (v_virt) from the estimating device (1), regulates the slip of the respective axle.

14. Rail vehicle according to claim 12 or 13,
**characterised in that**
connected to the estimating device (1) is a plausibility checking device (220) which carries out, with the estimated movement values from the estimating device (1), a plausibility check in relation to movement information from other sources.

15. Method for determining a new estimated movement value (v_virt) which indicates the speed of a rail vehicle (200) having at least two axles,
wherein in the method

- into a Kalman filter (30) on the input side are supplied at least torque values (m_p_i, m_e_i), vertical force values (Q_i), wheel size values (r_i) and wheel rotary speed values ($\omega$_i) and, on the basis thereof and on the basis of a Kalman filtration, a Kalman-estimated vehicle speed value (v_k) is determined,
- with the wheel size values (r_i), the wheel rotary speed values ($\omega$_i) and the respective prior estimated movement value (v_virt), a wheel circumferential speed value (v_circulate) and a sliding indication (actual_sliding) are determined, which indicates any sliding of the respective axle, and
- on the basis of the Kalman-estimated vehicle speed value (v_k), the wheel circumferential speed value (v_circulate) and the sliding indications, the new estimated movement value (v_virt) is determined.

**Revendications**

1. Dispositif (1) d'estimation pour la détermination d'une nouvelle valeur (v_virt) estimée de mouvement, qui indique la vitesse d'un véhicule (200) ferroviaire ayant au moins deux essieux, comprenant

- un filtre (30) de Kalman, qui est, du côté de l'entrée, alimenté au moins par des valeurs (m_p_i, m_e_i) de couple de force, des valeurs (Q_i) de force verticale, des valeurs (r_i) de dimension de roue et des valeurs ($\omega$_i) de nombre de tours de roue et qui, sur leur base ainsi que sur la base d'un filtrage Kalman, détermine une valeur (v_k) de vitesse de véhicule estimée suivant Kalman,
- un module (40) de pseudo-glissement qui, du côté de l'entrée, est alimenté en les valeurs (m_p_i, m_e_i) de couple de force, les valeurs (r_i) de dimension de roue, les valeurs ($\omega$_i) de nombre de tours de roue et la valeur (v_virt) estimée de mouvement précédente respectivement du dispositif (1) d'estimation et détermine une valeur (v_umlauf) de vitesse périphérique de roue et une indication de glissement, qui indique un glissement éventuel de l'essieu respectif, et
- un module (50) d'évaluation qui, sur la base de la valeur (v_k) de vitesse de véhicule estimée suivant Kalman, de la valeur (v_umlauf) de vitesse périphérique de roue et des indications de glissement, détermine la nouvelle valeur (v_virt) estimée de mouvement du dispositif (1) d'estimation.

2. Dispositif (1) d'estimation suivant la revendication 1,
**caractérisé en ce que**
le module (40) de pseudo-glissement,

- lors d'un fonctionnement en freinage du véhicule (200) ferroviaire, donne au module (50) d'évaluation la valeur (v_umlauf) de vitesse périphérique de roue de l'essieu avec la valeur de vitesse périphérique de roue la plus grande,
- lors d'un fonctionnement en entraînement, donne au module (50) d'évaluation la valeur (v_umlauf) de vitesse périphérique de roue de l'essieu avec la valeur de vitesse périphérique de roue la plus petite et,
- lors du glissement de tous les essieux, donne une indication (ist_gleiten) de glissement en tout au module (50) d'évaluation.

3. Dispositif (1) d'estimation suivant la revendication 2,
**caractérisé en ce que**
le module (50) d'évaluation,

- lors d'un fonctionnement en freinage ou en entraînement du véhicule (200) ferroviaire et sans glissement de tous les essieux, donne la valeur (v_umlauf) de vitesse périphérique de roue comme la nouvelle valeur (v_virt) estimée de mouvement, et
- lors du glissement de tous les essieux, détermine la nouvelle valeur (v_virt) estimée de mouvement à l'aide de la valeur (v_k) de vitesse de véhicule estimée suivant Kalman du filtre (30) de Kalman.

4. Dispositif (1) d'estimation suivant l'une des revendications précédentes,
**caractérisé en ce que**

- le dispositif (1) d'estimation a un module (20) de calcul de force verticale, qui produit, au moins sur la base des valeurs (m_p_i, m_e_i) de couple de force, qui sont également mises à profit par le filtre (30) de Kalman, des valeurs (r_i) de grandeur de roue et de la valeur (v_virt) estimée de mouvement précédente respectivement du dispositif (1) d'estimation, une valeur (Q_i) de force verticale par essieu,
- dans lequel chacune des valeurs (Q_i) de force verticale du module (20) de calcul de force verticale forme l'une des valeur (Q_i) de force verticale, dont tire parti le filtre (30) de Kalman.

5. Dispositif (1) d'estimation suivant l'une des revendications précédentes,
**caractérisé en ce que**

- le dispositif (1) d'estimation a un module (10) de calcul du couple de freinage par frottement, qui produit, au moins sur la base d'une valeur (p_i) de pression de frein par essieu, des valeurs (r_i) de dimension de roue et de la valeur (v_virt) estimée de mouvement précédente respective du dispositif (1) d'estimation, une valeur (m_p_i) de couple de freinage par frottement,
- dans lequel chacune des valeurs (m_p_i) de couple de freinage par frottement forme l'une des valeurs (m_p_i, m_e_i) de couple de force, dont tire parti le filtre (30) de Kalman.

6. Dispositif (1) d'estimation suivant l'une des revendications précédentes,
**caractérisé en ce que**
le filtre (30) de Kalman tire parti, comme valeurs (m_p_i, m_e_i) de couple de force, de valeurs (m_e_i) de couple de force de moteur rapportées à l'essieu ou du moins les prend en compte également.

7. Dispositif (1) d'estimation suivant l'une des revendications précédentes,
**caractérisé en ce que**
le filtre (30) de Kalman est un filtre (30) de Kalman étendu.

8. Dispositif (1) d'estimation suivant l'une des revendications précédentes,
**caractérisé en ce que**
le dispositif (1) d'estimation donne, comme autre valeur (a_virt) estimée de mouvement, une vitesse d'accélération de véhicule indiquant l'accélération du véhicule (200) ferroviaire.

9. Dispositif (1) d'estimation suivant l'une des revendications précédentes,
**caractérisé en ce que**

- le filtre (30) de Kalman détermine en outre, par essieu, une valeur ($\mu$_i) d'adhérence concernant le contact force-rail,
- le dispositif (1) d'estimation donne en outre les valeurs ($\mu$_i) d'adhérence.

10. Dispositif (1) d'estimation suivant l'une des revendications précédentes,
**caractérisé en ce que**
le dispositif d'estimation comprend un dispositif (110) informatique et une mémoire (120), dans laquelle sont mis en mémoire

- un module (M30) logiciel de filtre de Kalman qui, lors de l'exécution par le dispositif informatique, forme le filtre (30) de Kalman,
- un module (M40) logiciel de pseudo-glissement qui, lors de l'exécution, forme le dispositif informatique du module (40) de pseudo-glissement, et
- un module (M50) logiciel d'évaluation qui, lors de l'exécution par le dispositif informatique, forme le module (50) d'évaluation.

11. Dispositif (1) d'estimation suivant la revendication 10,
**caractérisé en ce que**
dans la mémoire (120) sont mis en mémoire

- un module (M20) logiciel de calcul de force verticale qui, lors de l'exécution par le dispositif informatique, forme le module (20) de calcul de force verticale, et/ou
- un module (M10) logiciel de calcul de couple de freinage de frottement qui, lors de l'exécution par le dispositif informatique, forme le module (10) de calcul de couple de freinage de frottement.

**12.** Véhicule (200) ferroviaire,
**caractérisé en ce que**
le véhicule ferroviaire est équipé d'un dispositif (1) d'estimation suivant l'une des revendications précédentes.

**13.** Véhicule ferroviaire suivant la revendication 12,
**caractérisé en ce que**,
avec le dispositif (1) d'estimation est en liaison un régleur (210) de pseudo-glissement qui, en tirant parti des valeurs d'adhérence de force estimées par essieu, des valeurs de vitesse de périphérie de roue et de la valeur (v_virt) d'estimation de mouvement respectif du dispositif (1) d'estimation, règle le pseudo-glissement de l'essieu respectif.

**14.** Véhicule ferroviaire suivant la revendication 12 ou 13,
**caractérisé en ce que**,
avec le dispositif (1) d'estimation est en liaison un dispositif (220) de vraisemblance, qui effectue, avec les valeurs d'estimation de mouvement du dispositif (1) d'estimation, un contrôle de vraisemblance concernant des indications de mouvement d'autres sources.

**15.** Procédé de détermination d'une nouvelle valeur (v_virt) de mouvement, qui indique la vitesse d'un véhicule (200) ferroviaire ayant au moins deux essieux,

- on injecte, dans un filtre (30) de Kalman du côté de l'entrée, au moins des valeurs (m_p_i, m_e_i) de couple, des valeurs (Q_i) de force verticale, des valeurs (r_i) de dimension de roue et des valeurs ($\omega$_i) de nombre de tours de roue et, sur leur base ainsi que sur la base d'un filtrage Kalman, on détermine une valeur (v_k) de vitesse de véhicule estimée par Kalman,
- par les valeurs (r_i) de dimension de roue, les valeurs ($\omega$_i) de nombre de tours de roue et la valeur (v_virt) de mouvement déterminée auparavant respectivement, on détermine une valeur (v_umlauf) de vitesse périphérique de roue et une indication (ist_gleiten) de glissement, qui indique un glissement éventuel de l'essieu respectif, et
- sur la base de la valeur (v_k) de vitesse du véhicule estimée par Kalman, de la valeur de vitesse (v_umlauf) périphérique de roue et des indications de glissement, on détermine la nouvelle valeur (v_virt) d'estimation de mouvement.

FIG 1

EP 4 511 264 B1

FIG 2

EP 4 511 264 B1

# FIG 3

EP 4 511 264 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019211934 A1